# DEMANDE DE BREVET EUROPEEN

(11) **EP 1 036 630 A1**
(43) Date de publication de la demande: **20.09.2000**
(21) Numéro de dépôt: 00400735.7
(22) Date de dépôt: 16.03.2000
(51) Int. Cl.: B23Q 16/06

(54) **Système d'indexage et de blocage automatique d'un porte-pièce**

(30) Priorité: 16.03.1999 FR 9903211
(71) Demandeur: Beguin, Gérard, 58160 Imphy (FR)
(72) Inventeur: Beguin, Gérard, 58160 Imphy (FR)
(74) Mandataire: Bruder, Michel

(57) **Abrégé**

L'invention concerne un système d'indexage et de blocage du porte-pièce (1), pouvant être mis en rotation sur lui-même ou déplacé linéairement et comportant des moyens de mise en mouvement, automatiques ou manuels, par rapport à un socle (2) fixé à la table de la machine automatisée ou semi-automatisée, des moyens d'indexage et de blocage de manière à occuper, automatiquement et successivement, soit une position de blocage, soit une position de libération du porte-pièce et des moyens de commande pour solliciter lesdits moyens d'indexage, remarquable en ce que les moyens d'indexage et de blocage sont constitués par un guide (9) venant se positionner dans des moyens d'auto-centrage munis de moyens d'amortissement pour freiner le guide (9), éviter le rebond dudit guide (9) pendant le mouvement d'indexage et procurer un anti-retour du porte-pièce (1) et en ce que la commande des moyens de blocage est obtenue par un actionneur piloté par l'action conjuguée du guide (9) et des moyens d'auto-centrage.

## Description

La présente invention concerne un système d'indexage et de blocage automatique du porte-pièce d'une machine automatique et plus particulièrement un système à déplacement libre d'un porte-pièce avec indexage et libération du porte-pièce en automatique.

Dans le domaine de l'industrie et plus singulièrement dans le domaine de l'assemblage de pièces métalliques ou plastiques par exemple, il est aujourd'hui nécessaire de produire un grand nombre de pièces pour un coût réduit grâce à des stations automatisées séquentielles pilotées par un opérateur qui est également chargé de mettre en place sous la station automatique les pièces à transformer et de les retirer ensuite.

Pour accroître la productivité on a conçu des ensembles automatisés ou semi-automatisés comprenant un plateau diviseur rotatif indexable sur lequel sont agencées des palettes pour accueillir les pièces à transformer, le plateau se déplaçant par intermittence d'un pas angulaire correspondant à deux palettes successives pour amener et arrêter chaque palette devant une même station de travail ou une même palette devant une pluralité de stations de travail.

C'est, par exemple, le cas du brevet français FR 2548944 concernant un dispositif d'indexage et de blocage d'un plateau rotatif de machine outil. Ce dispositif comprend notamment des moyens d'indexage et de blocage qui sont constitués par une couronne encochée solidaire d'un plateau rotatif coopérant avec des billes partiellement engagées dans des gorges du corps du porte plateau qui peuvent occuper une position d'indexage ou une position de libération du plateau. La sélection de la position est obtenue au moyen d'une manette associée à une came de blocage ou de déblocage qui pivote à l'intérieur du porte pièce coaxialement avec la couronne encochée.

Ce type de dispositif présente l'inconvénient de nécessiter de nombreuses manoeuvres de la part de l'opérateur ; par ailleurs, le plateau est libre de tourner dans les deux sens ce qui augmente le risque d'accident lors des manipulations.

D'autres solutions ont encore été proposées pour résoudre le problème du temps de manipulation de l'opérateur en automatisant la rotation et l'indexage du porte-pièce : c'est par exemple le cas du brevet français FR 2747330 qui concerne une machine d'usinage à transfert circulaire comportant un plateau porte-palettes supportant en des emplacements repartis circulairement et angulairement espacés, des palettes porte montage d'usinage, une pluralité de stations de travail fixes réparties circonférentiellement autour du plateau et des moyens d'indexage réalisant le blocage en rotation du plateau sur le socle fixe. Les moyens de commande de blocage du plateau consistent en des moyens de commande de monte et baisse du plateau entre une position haute de rotation et une position basse d'arrêt bloquée par les moyens d'indexage et des moyens de commande de rotation du plateau suivant un pas angulairement prédéterminé, les moyens de commande précités étant programmés pour provoquer, par intermittence, successivement et cycliquement la montée, la rotation et la descente du plateau, c'est à dire le blocage du plateau. Il existe, par ailleurs, des plateaux rotatifs pneumatiques ou électriques à came ainsi que des transferts à palettes libres permettant la rotation et l'indexage automatique du porte-pièce.

Ces dispositifs présentent outre les inconvénients de nécessiter des appareillages compliqués et onéreux, tels que des vérins à double effet ou un carter mobile pour protéger l'opérateur lors de la phase de travail pour être conforme aux normes de sécurité actuellement en vigueur, l'inconvénient de monopoliser, particulièrement pour les machines semi-automatisées, l'opérateur pendant toute la durée du traitement de la pièce par la station automatisée ce qui diminue le rendement de l'opérateur ; en effet, celui-ci enlève la ou les pièces transformées, puis installe une pièce ou des pièces à transformer sur la palette ou les palettes correspondantes et enfin donne l'autorisation de départ du cycle de traitement ; ensuite l'opérateur est inactif pendant toute la durée du cycle de traitement, puis, une fois le cycle terminé, il enlève la ou les pièces transformées et installe enfin une ou plusieurs nouvelles pièces à transformer pour recommencer un nouveau cycle.

L'un des buts de l'invention est donc de pallier ces inconvénients en proposant un système d'indexage et de blocage automatique du porte-pièce d'une machine automatisée ou semi-automatisée comprenant un appareillage simple et peu onéreux pour supprimer et au moins atténuer, les mouvements relatifs du porte-pièce par rapport au socle, pour assurer une meilleure sécurité de l'opérateur et pour augmenter le rendement de ce dernier.

A cet effet et conformément à l'invention, il est proposé un système d'indexage et de blocage du porte-pièce, notamment pour machine automatisée, pouvant être mis en rotation sur lui-même ou déplacé linéairement et comportant des moyens de mise en mouvement, automatiques ou manuels, par rapport à un socle fixé à la table de la machine automatisée ou semi-automatisée, des moyens d'indexage et de blocage de manière à occuper, automatiquement et successivement, soit une position de blocage soit une position de libération du porte-pièce et des moyens de commande pour solliciter lesdits moyens d'indexage et de blocage ; ce système est remarquable en ce que les moyens d'indexage sont constitués par un guide venant se positionner dans des moyens d'auto-centrage munis de moyens d'amortissement pour freiner le guide, éviter le rebond dudit guide pendant le mouvement d'indexage et procurer un anti-retour du porte-pièce et en ce que la commande des moyens de blocage est obtenue par un actionneur piloté par l'action conjuguée du guide et des moyens d'auto-centrage.

Contrairement à l'art antérieur, la commande de blocage du porte-pièce n'est pas assurée par des moyens indépendants mais par la coopération du guide et des moyens d'auto-centrage ce qui permet d'obtenir le blocage lorsque le guide est parfaitement centré par rapport aux moyens de blocage et aux moyens d'auto-centrage et évite ainsi tout mouvement relatif du porte-pièce par rapport au socle fixé à la table de la machine automatisée ou semi-automatisée.

Selon une caractéristique essentielle de l'invention, les moyens de blocage comprennent au moins une encoche apte à accueillir le guide pour procurer le blocage effectif du porte-pièce et les moyens d'auto-centrage comprennent un chemin de came le long duquel le guide est préalablement en contact, pendant le mouvement d'indexage, de telle sorte qu'en fin de coopération entre le guide et le chemin de came, l'actionneur soit activé pour positionner le guide dans l'encoche et assurer le blocage du porte-pièce.

On voit bien que l'indexage et le blocage s'effectue en plusieurs étapes ne nécessitant qu'un nombre limité de moyens pour assurer le centrage, le blocage et la commande du blocage du porte-pièce.

D'autres avantages et caractéristiques ressortiront mieux de la description qui va suivre, de plusieurs variantes d'exécution, données à titre d'exemples non limitatifs, du système conforme à l'invention, en référence aux dessins annexés sur lesquels :
- la figure 1 est une coupe verticale diamétrale d'un premier mode de réalisation de l'invention appliquée à l'indexage et au blocage d'un plateau rotatif porte-pièce d'une machine automatisée ou semi-automatisée, le dispositif étant représenté en position de blocage,
- la figure 2 est une coupe horizontale partielle suivant l'axe II-II' de la figure 1, le dispositif étant représenté en position libre,
- la figure 3 est une coupe horizontale partielle suivant l'axe II-II' de la figure 1, le dispositif étant représenté en position d'indexage,
- la figure 4 est une coupe horizontale partielle suivant l'axe II-II' de la figure 1, le dispositif étant représenté en position de blocage,
- la figure 5 est une coupe verticale diamétrale d'un second mode de réalisation de l'invention appliquée à l'indexage et au blocage d'un plateau rotatif porte-pièce d'une machine automatisée ou semi-automatisée, le dispositif étant représenté en position de blocage,
- la figure 6 est une coupe horizontale partielle suivant l'axe VI-VI' de la figure 5, le dispositif étant représenté en position libre,
- la figure 7 est une coupe horizontale partielle suivant l'axe VI-VI' de la figure 5, le dispositif étant représenté en position d'indexage,
- la figure 8 est une coupe horizontale partielle suivant l'axe VI-VI' de la figure 5, le dispositif étant représenté en position de blocage.

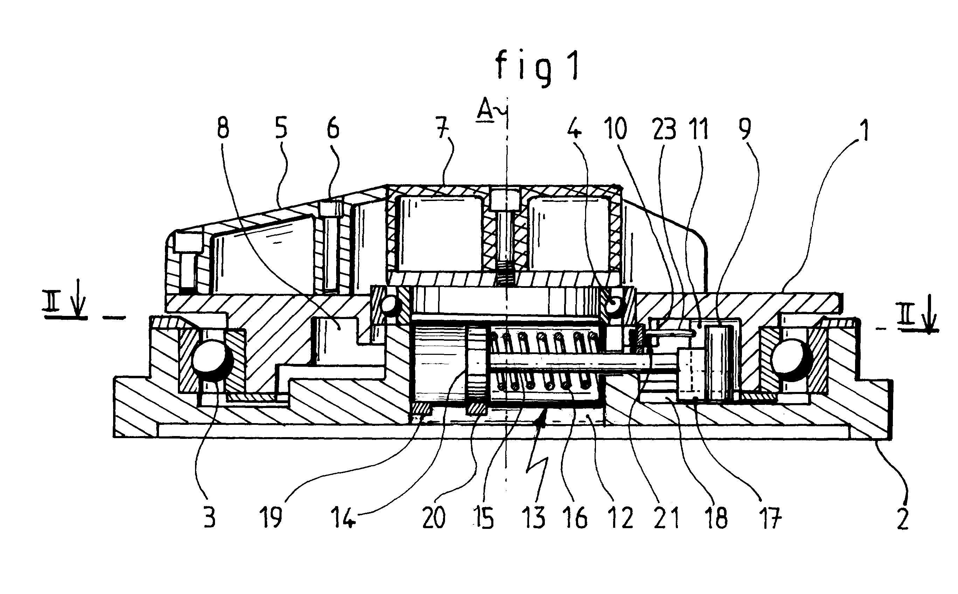

Le dispositif représenté sur les figures 1 à 4 est destiné à assurer l'indexage et le blocage d'un plateau rotatif que l'on nommera plus généralement porte-pièce 1 qui sert à supporter une pièce à transformer sur une machine automatisée ou semi-automatisée.

Le porte-pièce 1, dont l'axe géométrique A est vertical dans cet exemple, est guidé et supporté en rotation par un socle 2 fixe comprenant deux roulements à billes 3,4, l'un 3 à sa périphérie intérieure pour supporter verticalement le porte-pièce 1 et l'autre 4 à son extrémité supérieure centrale pour éviter le jeu radial du porte-pièce 1 lors de sa rotation. Par ailleurs, le porte-pièce 1 comprend sur sa face supérieure un carter 5 fixé audit porte-pièce 1 par des vis 6 ; ce carter 5 se présente sous la forme d'une paroi rigide verticale s'étendant radialement depuis un carter central 7 jusqu'au bord du porte-pièce 1. Ces carters 5 et 7 séparent deux palettes du porte-pièce 1 pour assurer une plus grande sécurité de l'opérateur lors des différentes manipulations en complétant le carter fixe ou mobile du poste automatisé.

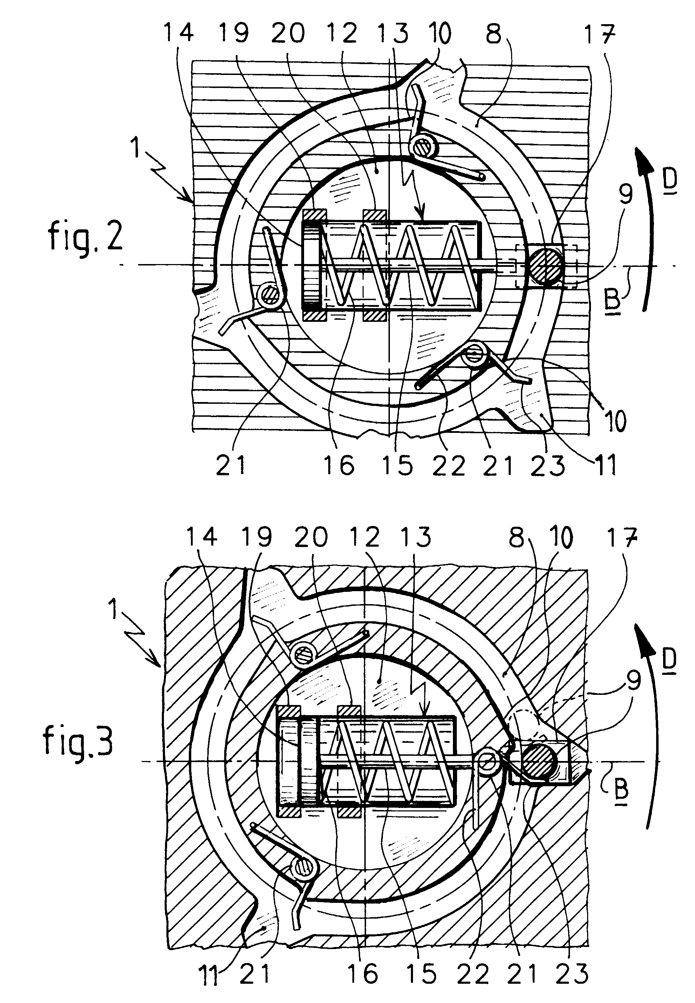

Le porte-pièce 1 comprend, par ailleurs, sur sa face interne une gorge 8 s'étendant circulairement autour de l'axe A, dans un plan horizontal, et coopérant avec un guide vertical 9, avantageusement cylindrique. De plus, cette gorge 8 comprend un chemin de came 10 et une encoche 11, en forme générale de V (figure 2), dans laquelle vient se loger le guide 9 pour procurer le blocage du porte-pièce 1 comme on le verra en détail un peu plus loin.

Il va de soi que la gorge 8 comprendra autant de chemins de came 10 et d'encoches 11 qu'il y aura de positions d'indexage, c'est à dire de porte palettes sur le porte-pièce 1.

Le socle 2 comprend, dans sa partie centrale, un évidement 12 cylindrique dans lequel est radialement positionné un vérin pneumatique 13 à simple effet constituant un actionneur. Ce vérin pneumatique 13 est constitué d'un piston 14 solidaire d'une tige 15 et d'un ressort hélicoïdal de rappel 16. La tige 15 comprend à son extrémité un nez 17 supportant le guide vertical 9 qui peut éventuellement être monté libre en rotation par rapport à son axe pour diminuer ses frottements sur les parois de la gorge 8.

Le guide 9, le nez 17 et la tige 15 peuvent se déplacer horizontalement suivant un rayon de la cavité 18 pratiquée dans le socle 2 pour assurer successivement une position de blocage et une position de libération du porte-pièce 1. Le vérin pneumatique 13 comprend, par ailleurs, dans sa partie inférieure, deux capteurs 19,20, par exemple du type sans contact, pour déterminer la position du piston 14 et, par conséquent, celle du guide 9 ; les informations ainsi prélevées sont ensuite transmises à un calculateur qui commande classiquement le vérin pneumatique 13 par des moyens non représentés sur les figures.

Par ailleurs, en référence à la figure 2, le flan le plus intérieur de la gorge 8 est profilé suivant un chemin de came 10 défini de telle manière que le rayon de celui-ci croît progressivement à l'approche de l'encoche 11 pour atteindre sa valeur maximale à mi-chemin entre l'entrée de l'encoche 11 et le rayon passant par la pointe du V de l'encoche 11, c'est-à-dire l'axe B sur la figure 3, puis son rayon décroît progressivement pour revenir à sa valeur initiale à la sortie de l'encoche 11. A l'extrémité la plus saillante du chemin de came 10 est positionné un ressort à spires 21, constituant des moyens d'amortissement, d'axe vertical comprenant à chacune de ses extrémités une tige horizontale 22,23, l'une 22 étant fixée sur le porte-pièce 1 au niveau du bord interne de la gorge 8 et l'autre 23 s'étendant transversalement dans la gorge 8 sur une longueur globalement égale à la largeur de ladite gorge 8. L'axe du ressort 21 est centré sur le rayon passant par la pointe du V de l'encoche 11, en position d'indexage représentée à la figure 3, de plus les tiges 22 et 23 sont avantageusement montées à angle droit.

Il va de soi que le ressort 21 peut être un ressort à lames dont les deux lames forment un angle droit entre elles et dont leur intersection coïncident avec l'axe de symétrie de l'encoche 11.

La tige 23 est légèrement cintrée à son extrémité de telle sorte qu'en position de repos, son extrémité soit en regard de la face d'entrée de l'encoche 11 (figure 2) et qu'en position d'indexage, l'extrémité de ladite tige 23 soit en contact avec la face opposée de l'encoche 11 (figure 3). La tige 23 et le chemin de came 10 constituent, par ailleurs, des moyens d'auto-centrage comme on l'a vu dans le préambule.

On expliquera maintenant le fonctionnement du dispositif selon l'invention en référence aux figures 2, 3 et 4.

Dans la position illustrée à la figure 2, le guide 9 étant fixe et le porte-pièce 1 en rotation dans le sens inverse des aiguilles d'une montre comme l'indique la flèche D, le guide 9 se déplace dans la gorge 8 globalement circulaire pratiquée dans ledit plateau 1. Le piston 14 du vérin pneumatique 13, solidarisé avec le guide 9 par l'intermédiaire de la tige 15 et du nez 17, est alors en position de repos à la verticale du capteur sans contact 19.

La rotation du porte-pièce 1 se poursuit suivant la flèche D (figures 2, 3 et 4) et le guide 9, représenté en pointillé sur la figure 3, en contact avec l'entrée du chemin de came 10 vient alors déplacer le piston 14 suivant l'axe B ; ledit piston 14 n'est alors que partiellement à la verticale du capteur sans contact 19. Le guide 9 entre également en contact avec la tige 22 solidaire du ressort à spires 21 qui freine la progression du guide 9 jusqu'à ce que l'extrémité, légèrement cintrée, de la tige 22 entre en contact avec la paroi de l'encoche 11 (figure 3). La tige 22 empêche ainsi le guide 9 de dépasser la position de l'encoche 11 ; par ailleurs, dans cette position représentée en trait plein sur la figure 3, le guide 9, le centre des spires du ressort 21 et l'encoche 11 sont parfaitement alignés sur l'axe B du vérin pneumatique 13. Le piston 14, dans cette position, n'est plus à la verticale du capteur sans contact 19 ; l'information est alors transmise à un calculateur qui provoque l'extension du vérin pneumatique 13.

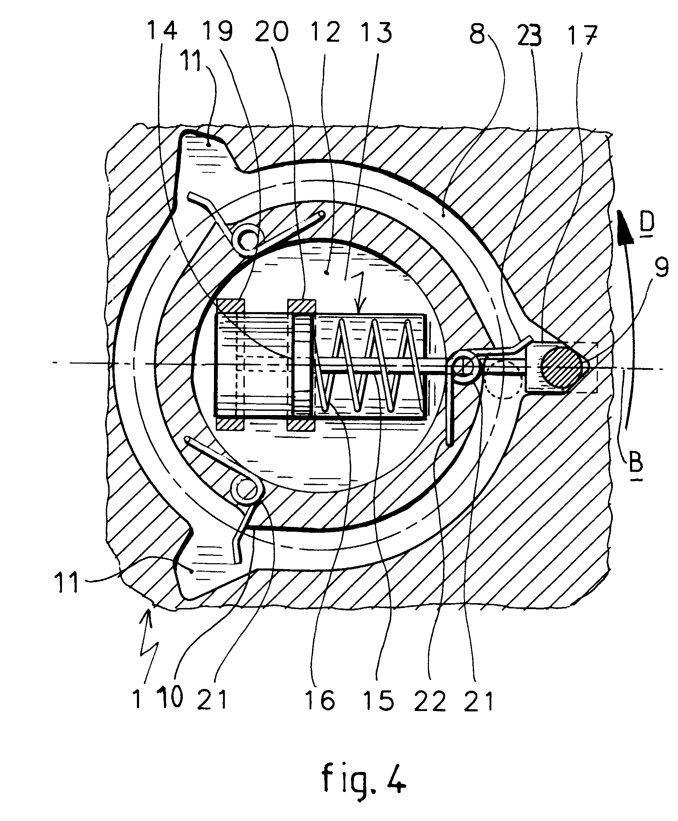

Le guide 9, en trait plein sur la figure 4, est alors positionné dans l'encoche 11 et procure ainsi le blocage du porte-pièce 1. La tige 22 solidaire du ressort à spires 21 qui était jusqu'à présent comprimé revient dans sa position initiale, c'est à dire que la tige 22 s'étend à nouveau transversalement dans la gorge 8 de telle sorte que son extrémité soit en regard de la face d'entrée de l'encoche 11. Le piston 14 du vérin pneumatique 13 se trouve ainsi à la verticale du deuxième capteur sans capteur 20 ; l'information est transmise au calculateur qui déclenche le cycle de la machine automatisée ou semi-automatisée.

Une fois le cycle de transformation effectué, le piston 14 revient dans sa position de repos, illustrée sur la figure 4 en traits pointillés, et le guide 9 est à nouveau engagé dans la gorge 8 autorisant à nouveau la rotation du porte-pièce 1 suivant la flèche D. La tige 23 empêche une rotation inverse ce qui assure une plus grande sécurité pour l'opérateur.

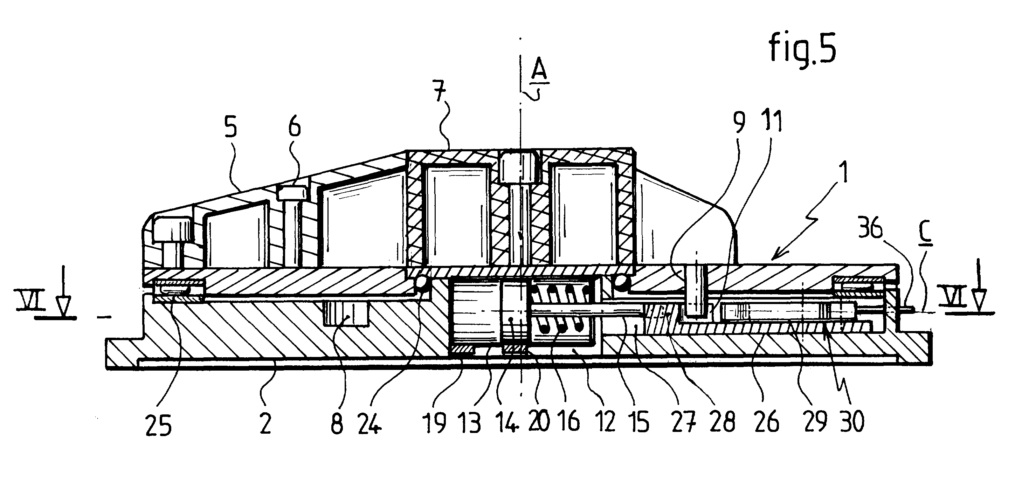

Selon une variante d'exécution représentée sur les figures 5 à 8, le porte-pièce 1 rotatif dont l'axe A est vertical dans cet exemple, est guidé et supporté en rotation par un socle 2 fixe comprenant un roulement à billes 24 à son extrémité supérieure centrale et un roulement à aiguilles 25 à sa périphérie intérieure comme on l'a déjà dit précédemment. Par ailleurs, le porte-pièce 1 comprend également sur sa face supérieure un carter 5 fixé audit plateau 1 par des vis 6 ; ce carter 5 se présente sous la forme d'une paroi rigide verticale s'étendant radialement depuis un carter central 7 jusqu'au bord du porte-pièce 1. Ces carters 5 et 7 séparent deux palettes du porte-pièce 1 pour assurer une plus grande sécurité pour l'opérateur lors des différentes manipulations en complétant le carter fixe ou mobile du poste de transformation.

Le porte-pièce 1 comprend, par ailleurs, sur sa face interne, un guide 9 de section avantageusement circulaire s'étendant perpendiculairement par rapport au plan formé par ledit porte-pièce 1 et coopérant avec une gorge 8 globalement circulaire pratiquée dans la face supérieure du socle 2 et qui s'étend dans le plan horizontal.

Le socle 2 comprend, dans sa partie centrale, un évidement 12 cylindrique dans lequel est positionné un vérin pneumatique 13, avantageusement, à simple effet, ce qui constitue un actionneur comme on l'a déjà vu. Ce vérin pneumatique 13 est constitué d'un piston 14 solidaire d'une tige 15 s'étendant vers l'extérieur, vers la droite sur la figure 5, lorsque le vérin pneumatique est mis en pression et d'un ressort hélicoïdal 16, tendant à rappeler la tige 15 lorsque ledit vérin pneumatique 13 n'est plus alimenté.

Le vérin pneumatique 13 est associé, par ailleurs, à deux capteurs 19,20 du type sans contact, pour déterminer la position du piston 14, et par conséquent celle des moyens de blocage ; les informations ainsi prélevées sont ensuite transmises à un calculateur qui commande le vérin pneumatique 13 grâce à des moyens classiques non représentés sur les figures.

Il va de soi que le vérin pneumatique 13 peut être substitué par n'importe quel vérin pneumatique similaire à simple ou double effet tel qu'un vérin magnétique, hydraulique, etc...

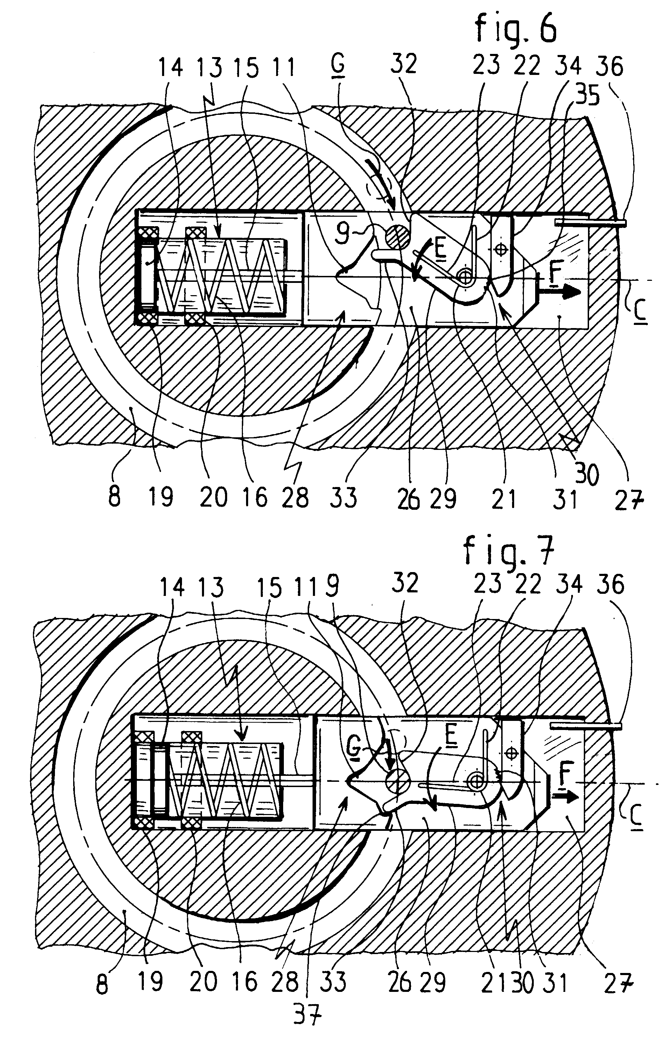

Conformément aux figures 6 à 8, l'extrémité de la tige 15 du vérin pneumatique 13 s'étendant suivant l'axe radial C est solidarisé avec un plateau 26 de forme globalement rectangulaire. Ce plateau 26 est monté libre en translation suivant l'axe C dans un évidement 27 pratiqué dans le socle 2 et s'étendant radialement depuis le vérin pneumatique 13 jusqu'à la périphérie dudit socle 2. Par ailleurs, le plateau 26 comprend sur sa face supérieure un organe de blocage 28 comprenant une encoche 11 en forme générale de V centrée sur l'axe C, une came 29 montée libre en rotation suivant un axe perpendiculaire au plateau 26 et centré sur l'axe C, un ressort à spires 21 (figure 6) à axe vertical centré sur l'axe de rotation de la came 29 et un système à rochet 30. La came 29 est une pièce plate de forme générale rectangulaire dont l'extrémité extérieure est un demi-cercle muni de dents 31 (figure 6) et l'extrémité intérieure a un profil concave en forme générale de V apte à accueillir le guide 9 et déterminant un chemin de came 32 se terminant par un bras 33 s'étendant parallèlement à l'axe C et faisant face à l'entrée de l'encoche 11 en position de repos, représentée en trait plein sur la figure 6. Par ailleurs, le chemin de came 22 et le bras 33 de la came 29 montée sur le plateau 26 constituent les moyens d'auto-centrage. L'axe de rotation de la came 29 se situe au niveau de son extrémité extérieure et le ressort coaxial à spires 21, constituant les moyens d'amortissement, comprend à chacune de ses extrémités une tige 22,23 ; l'une 22 s'étend perpendiculairement à l'axe C, dans le plan horizontal, son extrémité étant solidarisée au plateau 26 et l'autre 23 s'étend le long de l'axe longitudinal de la came 29 à laquelle elle est fixée.

Le système à rochet 30 est constitué d'un bras 34 (figure 6) monté libre en rotation sur le plateau 26, suivant un axe perpendiculaire audit plateau 26, dont l'une des extrémités comprend un ergot 35 coopérant avec les dents 31 de l'extrémité externe de la came 29 pour que cette dernière ne soit libre en rotation que suivant la flèche E lors de l'indexage (figure 7). Une butée 36 fixée au socle 2 et faisant saillie parallèlement à l'axe C dans l'évidement 27 permet de libérer la came 29 du rochet 30 lors du blocage du porte-pièce 1 comme il sera dit plus loin.

On expliquera maintenant le fonctionnement du dispositif selon l'invention en référence aux figures 6, 7 et 8.

Dans la position illustrée à la figure 6, le guide 9 étant fixé au porte-pièce 1 et ce dernier étant en rotation dans le sens des aiguilles d'une montre comme l'indique la flèche G, le guide 9, représenté en pointillé sur la figure 6, se déplace dans la gorge 8 globalement circulaire pratiquée dans le socle 2. Le piston 14 du vérin 13, solidarisé avec le plateau 26 par l'intermédiaire de la tige 15, est alors en position de repos à la verticale du capteur sans contact 19. Le guide 9 poursuit sa rotation dans la gorge 8 suivant la flèche G puis entre en contact avec le chemin de came 32, dans la position représentée en trait plein sur la figure 6, et provoque ainsi la rotation de la came 29 dans le sens inverse des aiguilles d'une montre comme l'indique la flèche E. Etant donné que la came 29 fait un angle d'environ 45° avec l'axe C, en position de repos (figure 6), et que son axe de rotation est centré sur ledit axe C, le guide 9 met également en translation le plateau 26 suivant l'axe C comme l'indique la flèche F. Par ailleurs, les mouvements de rotation de la came 29 et de translation du plateau 26 sont freinés par le ressort 21 qui subit une extension lors du mouvement de rotation E de la came 29.

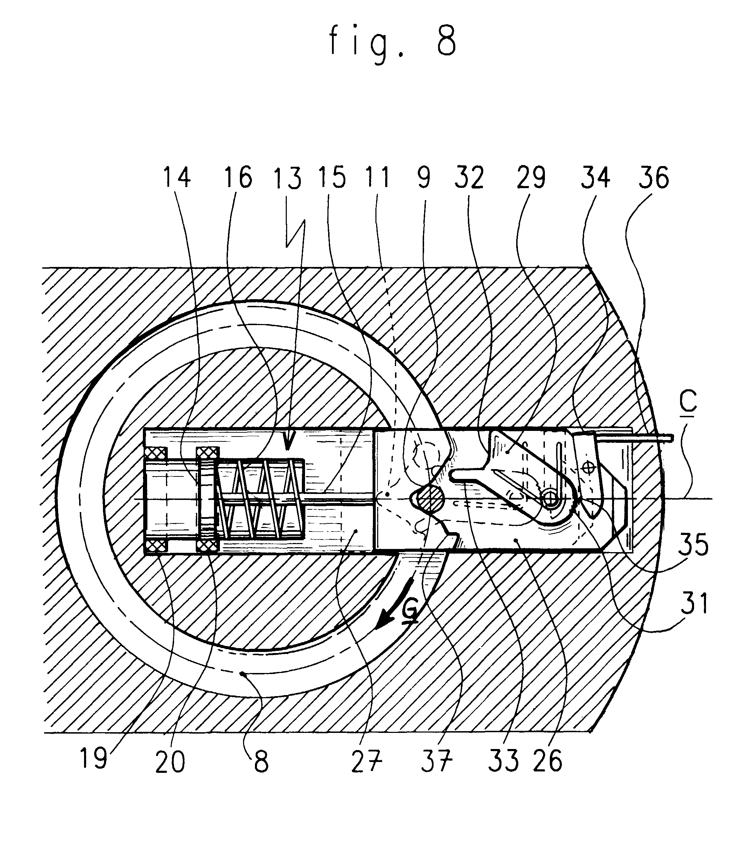

En référence à la figure 7, le bras 33 du chemin de came 32 vient alors en butée contre l'une des faces de l'encoche 11 et plus précisément, l'extrémité du bras 33 est en butée dans un léger renfoncement 37 pratiqué à cet effet sur la face de ladite encoche 11. Le guide 9 et l'encoche 11 sont alors parfaitement centrés suivant l'axe C ; à cet instant, le piston 14 n'est plus à la verticale du capteur sans contact 19 qui transmet l'information au calculateur qui déclenche le vérin 13. L'ensemble du plateau 26 est alors déplacé vers l'extérieur suivant l'axe C, comme représenté sur la figure 8.

Le guide 9 est alors positionné dans l'encoche 11 procurant ainsi le blocage du porte-pièce 1, la came 29 qui était bloqué en butée sur la face de l'encoche 11 est libérée lorsque le plateau 26 arrive en fin de course. En effet, la butée 36 entre alors en contact avec le bras 34 du rochet 30 qui pivote autour de son axe et désolidarise l'ergot 35 dudit bras 34 des dents 31 de la came 29 ; cette dernière revient alors dans sa position initiale, représentée en trait plein sur la figure 8, grâce au ressort 21 qui était en extension lors du mouvement de rotation E de la came 29 au début de l'indexage. Le piston 14 est alors positionné à la verticale du capteur sans contact 20 ce qui déclenche le début du cycle de transformation de la pièce positionnée sur la palette correspondante du porte-pièce 1.

A la fin du cycle de transformation, le vérin 13 revient dans sa position initiale, c'est à dire que le piston se trouve alors à nouveau à la verticale du capteur sans contact 19, le guide 9 est alors libéré de l'encoche 11 et le porte-pièce 1 est à nouveau libre en rotation. La rotation du porte-pièce 1 ne peut alors se faire que dans le sens des aiguilles d'une montre comme l'indique la flèche G car, en position de libération, le bras 33 du chemin de came 32 s'étend transversalement dans la gorge 8 parallèlement à l'axe C.

Il va de soi qu'à chaque position d'indexage correspond un guide 9.

Par ailleurs, il va de soi que la gorge 8 décrite dans ces deux variantes d'exécution de l'invention peut s'étendre dans un cylindre coaxial au porte-pièce 1, les moyens d'auto-centrage et de blocage s'étendant globalement dans un plan perpendiculaire au porte-pièce 1.

Enfin, il va de soi que le système d'indexage et de blocage d'un porte-pièce selon l'invention peut être adapté à tous les types de porte-pièce, notamment un porte-pièce constitué par un plateau en translation, et que les exemples que l'on vient de donner ne sont que des illustrations particulières en aucun cas limitatives des domaines d'application de l'invention.

## Revendications

1. Système d'indexage et de blocage du porte-pièce (1), notamment pour machine automatisée ou semi-automatisée, pouvant être mis en rotation sur lui-même ou déplacé linéairement et comportant des moyens de mise en mouvement, automatiques ou manuels, par rapport à un socle (2) fixé à la table de la machine automatisée ou semi-automatisée, des moyens d'indexage et de blocage de manière à occuper, automatiquement et successivement, soit une position de blocage, soit une position de libération du porte-pièce et des moyens de commande pour solliciter lesdits moyens d'indexage et de blocage **caractérisé** en ce que les moyens d'indexage sont constitués par un guide (9) venant se positionner dans des moyens d'auto-centrage munis de moyens d'amortissement pour freiner le guide (9), éviter le rebond dudit guide (9) pendant le mouvement d'indexage et procurer un anti-retour du porte-pièce (1) et en ce que la commande des moyens de blocage est obtenue par un actionneur piloté par l'action conjuguée du guide (9) et des moyens d'auto-centrage.

2. Système d'indexage et de blocage d'un porte pièce selon la revendication 1 **caractérisé** en ce que les moyens de blocage comprennent au moins une encoche (11) apte à accueillir le guide (9) pour procurer le blocage effectif du porte-pièce (1) et que les moyens d'auto-centrage comprennent au moins un chemin de came (10) le long duquel le guide (9) est préalablement en contact, pendant le mouvement d'indexage, de telle sorte qu'en fin de coopération entre le guide (9) et le chemin de came (10), l'actionneur soit activé pour positionner le guide (9) dans l'encoche (11) et assurer le blocage du porte-pièce (1).

3. Système d'indexage et de blocage d'un porte pièce selon la revendication 2 **caractérisé** en ce que le guide (9) est solidaire de l'actionneur fixé au socle (2), ledit guide (9) étant libre de se déplacer suivant l'axe C de l'actionneur et en ce que les moyens d'auto-centrage sont solidaires du porte-pièce (1).

4. Système d'indexage et de blocage d'un porte pièce selon la revendication 2 **caractérisé** en ce que le guide (9) est solidaire du porte-pièce (1) et l'actionneur, fixé au socle (2), est solidarisé avec les moyens d'auto-centrage qui sont libres de se déplacer suivant l'axe C dudit actionneur.

5. Système d'indexage et de blocage d'un porte pièce selon la revendication 3 **caractérisé** en ce que les moyens de blocage et d'auto-centrage sont constitués par une gorge (8), pratiquée sur la face interne du porte-pièce (1), comprenant un flan externe et un flan interne sur les bords desquels sont formés respectivement au moins une encoche (11) en forme générale de V et un chemin de came (10) défini de telle manière que le rayon du flan interne croît progressivement à l'approche de l'encoche (11) pour atteindre sa valeur maximale à mi-chemin entre l'entrée de l'encoche (11) et le rayon passant par la pointe du V de ladite encoche (11), puis son rayon décroît progressivement pour revenir à sa valeur initiale à la sortie de l'encoche (11), et à l'extrémité la plus saillante duquel est positionné un ressort à spires (21) muni à chacune de ses extrémités d'une tige (22,23), l'une (22) étant fixée sur le flan interne de la gorge (8) et l'autre (23) s'étendant transversalement dans la gorge (8) sur une longueur globalement égale à la largeur de ladite gorge (8), de telle sorte que l'extrémité la plus saillante du chemin de came (10) ainsi que l'extrémité de la tige (23) soient en regard de la face d'entrée de l'encoche (11) en position de repos.

6. Système d'indexage et de blocage d'un porte pièce selon la revendication 5 **caractérisé** en ce que la tige (23) s'étendant transversalement dans la gorge (8) a son extrémité légèrement recourbée afin de venir en butée sur la face de sortie de l'encoche (11) de telle sorte que le guide (9) soit aligné avec ladite encoche (11) lors de l'indexage.

7. Système d'indexage et de blocage d'un porte pièce selon la revendication 4 **caractérisé** en ce que les moyens d'auto-centrage sont positionnés sur un plateau (26) monté libre en translation parallèlement à l'axe C de l'actionneur et comprenant un organe de blocage (28) du guide (9), une came (29) montée libre en rotation par rapport à un axe perpendiculaire au plan du socle (2) et centré sur l'axe C de l'actionneur dont l'extrémité opposée à l'axe de rotation présente un chemin de came (32), un ressort à spires (21) muni à chacune de ses extrémités d'une tige (22,23), l'une (22) étant fixée sur ledit plateau (26) et l'autre (23) fixée sur ladite came (29) pour freiner la rotation de la came (29) lors du mouvement d'indexage et éviter un dépassement de position du guide (9) et un rochet (30) constitué d'un bras (34) libre en rotation muni à son extrémité d'un ergot (35) coopérant avec la came (29) pour procurer un anti-retour du porte-pièce (1).

8. Système d'indexage et de blocage d'un porte pièce selon la revendication 7 **caractérisé** en ce que la came (29) est une pièce plate de forme globalement rectangulaire dont l'une des extrémités est un demi-cercle muni de dents (31) pour coopérer avec l'ergot (35) du rochet (30), montée en rotation libre autour d'un axe perpendiculaire au plan formé par le plateau (26) et situé sur l'axe C de l'actionneur, et l'autre extrémité a un profil concave en forme générale de V apte à accueillir le guide (9) déterminant le chemin de came (32) et se terminant par un bras (33) de telle sorte qu'en position de repos, ledit bras (33) s'étende parallèlement à l'actionneur.

9. Système d'indexage et de blocage d'un porte pièce selon l'une quelconque des revendications 7 ou 8 **caractérisé** en ce que l'organe de blocage (28) comprend une encoche (11) en forme générale de V centrée sur l'axe C de l'actionneur et dont l'une des faces comprend à son extrémité un renfoncement (37) dans lequel vient buter l'extrémité du bras (33) du chemin de came (32) pendant le mouvement d'indexage.

10. Système d'indexage et de blocage d'un porte pièce selon l'une quelconque des revendications précédentes **caractérisé** en ce que l'actionneur est un vérin pneumatique (13) à simple effet comprenant un piston (14), une tige (15) et un ressort hélicoïdal de rappel (16) et muni d'un capteur sans contact (19,20) à chacune des positions extrêmes du piston (14) afin de localiser la position du guide (9).
